# EUROPEAN PATENT APPLICATION

(11) **EP 1 855 351 A1**
(43) Date of publication of application: **14.11.2007**
(21) Application number: 06712188.9
(22) Date of filing: 23.01.2006
(51) Int. Cl.: H01Q 1/46, H01Q 5/01, H01Q 21/30, H04B 1/18

(54) **ANTENNA ASSEMBLY AND WIRELESS APPARATUS**

(30) Priority: 01.03.2005 JP 2005056067; 26.08.2005 JP 2005246450
(71) Applicant: MATSUSHITA ELECTRIC INDUSTRIAL CO., LTD., Osaka 571-8501 (JP)
(72) Inventor: SUMI, Shingo Matsushita Electric Industrial Co.Ltd., 2-1-61, Shiromi, Chuo-ku, Osaka 540-6207 (JP); TAKAHASHI, Tsukasa Matsushita Electric Industrial Co.Ltd., 2-1-61, Shiromi, Chuo-ku, Osaka 540-6207 (JP); NAGANO, Kenya Matsushita Electric Industrial Co.Ltd., 2-1-61, Shiromi, Chuo-ku, Osaka 540-6207 (JP); SAITO, Yutaka Matsushita Electric Industrial Co.Ltd., 2-1-61, Shiromi, Chuo-ku, Osaka 540-6207 (JP); SASAKI, Hiroyuki Matsushita Electric Industrial Co.Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2006/300972
(87) International publication number: WO 2006/092913

(57) **Abstract**

There is provided a connection cable and a portable device for a portable device that has high antenna performance in a broad frequency band by disposing an antenna element in the connection cable. A circuit board 16 is disposed on a connection cable 2 between a housing 1 and an earphone 25 at a predetermined distance from the housing 1. A second relay unit 20 is disposed between the circuit board 16 and the earphone 25 at a predetermined distance from the earphone 25. An earphone 26 is disposed on a front end of the connection cable that is branched from the second relay unit 20 into two parts. A coaxial cable 3 is disposed between the housing 1 and the circuit board 16, An antenna element 4 is disposed between the circuit board 16 and the second relay unit 20. An antenna element 5 is disposed between the second relay unit 20 and the earphone 26. An antenna element 6 is disposed between the second relay unit 20 and the earphone 26. A radio circuit section 12 disposed in the housing 1 feeds power to the antenna element 4, the antenna element 5, and the antenna element 6 via the coaxial cable 3.

## Description

### Technical Field

The present invention relates to an antenna device which is a linear conductor having an antenna function and a radio device.

### Background Art

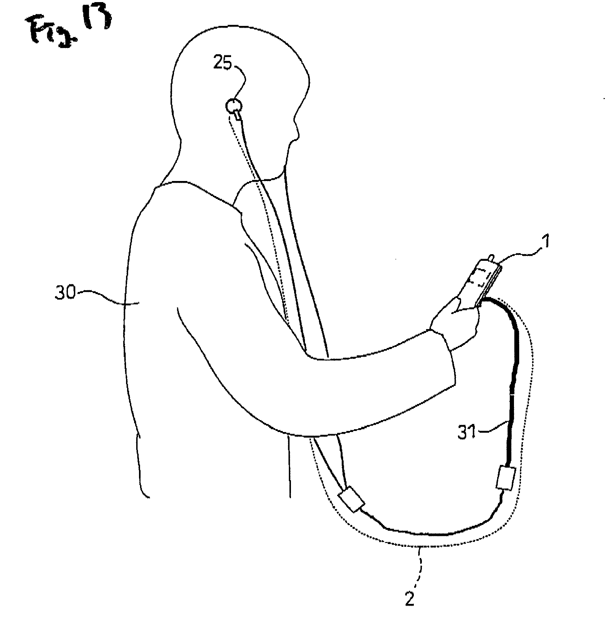

As a known antenna device that is formed integrally with a cable connected to a portable device, for example, a portable device that uses a signal line of an external connection device such as an earphone as an antenna is disclosed in Patent Document 1. In the portable device disclosed in Patent Document 1, as shown in Fig. 13, an antenna element 31 is disposed in a connection cable 2 adjacent to a housing 1 of the portable device. For this reason, as shown in Fig. 13, the antenna element 31 tends to be perpendicular to a ground due to an influence of gravity when a user 30 uses the portable device while putting on an earphone 25 and watching a screen (in a state of watching a television).
Patent Document 1: JP-A-2000-349868

### Disclosure of the Invention

### Problem that the Invention is to solve

However, in the antenna of the portable device shown in Patent Document 1, as shown in Fig. 13, the antenna element 31 tends to hang perpendicularly to the ground due to an influence of gravity when watching a television in actual, As a result, a principal polarized wave becomes perpendicular. Accordingly, when receiving the principal polarized wave such as a television broadcast that is a horizontal wave, broadcast receiving performance is deteriorated due to a difference of the principal polarized wave.
Additionally, the antenna element resonates with only one frequency. As a result, the antenna element can not handle multiple broad bands which are used in a terrestrial analog television broadcast using a VHF band and a UHF band.

The present invention is contrived to solve the above-mentioned known problems, and an object of the invention is to provide an antenna device capable of ensuring a high broadcast receiving performance in multiple broad frequency bands and a radio device.

### Means for Solving the Problems

According to an aspect of the invention, there is provided an antenna device that is formed integrally with a first connection unit connected a radio device, a connection cable for transmitting a plurality of signals from the radio device to a peripheral device, and a plurality of antenna elements, the antenna device including a coaxial line that is connected to the first connection unit; a first antenna element that is connected to the coaxial line and is disposed in the middle of the connection cable; and a second antenna element that is connected to the first antenna element through a cut-off unit for cutting off a first frequency band, wherein the first antenna element acts as an antenna operable in the first frequency band, and wherein all of the first antenna element and the second antenna element act as an antenna operable in a second frequency band, and signals received by the antenna elements are extracted from connection portions connected to the coaxial line and are transmitted to the radio device.

According to another aspect of the invention, there is provided an antenna device that is formed integrally with a first connection unit connected a radio device, a connection cable for transmitting a plurality of signals from the radio device to a peripheral device, and a plurality of antenna elements, the antenna device including a first relay unit and a second relay unit that relay a plurality of signals and is disposed in the middle of the connection cable at a predetermined interval; a first antenna element that is disposed between the first relay unit and the second relay unit; and a second antenna element that is disposed between the first relay unit and the peripheral device, wherein the first antenna element is connected to the second antenna element through a cut-off unit for cutting off a first frequency, and the cut-off unit being provided on the second relay unit, wherein the first antenna element acts as an antenna operable in the first frequency band, and wherein all of the first antenna element and the second antenna element act as an antenna in a second frequency band, and signals received by the antennas are extracted by the first relay unit and are transmitted to the radio device via the coaxial line disposed between the first connection unit and the relay unit.

With such a configuration, it is possible to acquire two resonances, that is, a resonance acquired from the first antenna element and a resonance acquired when connecting the first antenna element to the second antenna element. Further, it is possible to acquire high antenna performance in multiple broad frequency bands. Furthermore, it is possible to acquire high broadcast receiving performance by allowing a principal polarized wave corresponding to the first frequency band to be horizontal when using the radio device.

In the antenna device with the above-described configuration, a second connection portion and a third connection portion may be branched from the second relay unit and are connected to the peripheral device, the second antenna element is disposed between the second relay unit and one of the second connection portion and the third connection portion, and a third antenna element is disposed between the second relay unit and the other of the second connection portion and the third connection portion. In addition, all of the first antenna element and the third antenna element may act as an antenna operable in a third frequency band.

With such a configuration, since the first antenna element acts as an antenna operable in the first frequency band, the second antenna element acts as an antenna operable in the second frequency band, and all of the first antenna element and the third antenna element act as an antenna operable in the third frequency band when the connection cable is fitted in a connection unit, it is possible to acquire high antenna performance in a broad frequency band.

In the antenna device with the above-described configuration, an electrical length of the third antenna element may be longer than that of the second antenna element.

With such a configuration, since the first antenna element acts as an antenna operable in the first frequency band, all of the first antenna element and the second antenna element act as an antenna operable in the second frequency band, and the third antenna element acts as an antenna operable in the third frequency band when the connection cable is fitted in a connection unit, it is possible to acquire high antenna performance in a broad frequency band.

In the antenna device with the above-described configuration, a third antenna element that is disposed between the first relay unit and a third connection portion branched from the connection cable connected to the first relay unit so as to be connected to the peripheral device may be further provided, and the third antenna element may act as an antenna operable in the third frequency band, and also may act as an external antenna of the radio device.

In the antenna device with the above-described configuration, the third antenna element may be longer than a combined electrical length of the first antenna element and the second antenna element.

In the antenna device with the above-described configuration, the first relay unit may be provided with a second high frequency cut-off unit for cutting off the first and third frequency bands which is serially connected to a plurality of signal lines.

In the antenna device with the above-described configuration, the second relay unit may be provided with third high frequency cut-off unit for cutting off the first high frequency band which is serially connected to the plurality of signal lines.

In the antenna device with the above-described configuration, the first relay unit may be provided with a matching circuit that is electrically connected to the coaxial line and the first antenna element so as to provide impedance matching therebetween.

In the antenna device with the above-described configuration, the first relay unit or the second relay unit may be provided with a control unit for controlling the radio device which is disposed on the plurality of signal lines.

In the antenna device with the above-described configuration, the second relay unit may be provided with a connection portion that enables detachable connection to the connection cable.

In the antenna device with the above-described configuration, the connection cable may be provided with the plurality of signal lines and the antenna element, the signal lines and the antenna element are separately covered with a nonconductive film and that are disposed at a predetermined distance from each other.

In the antenna device with the above-described configuration, the peripheral device may be an earphone having a sound production element, the connection cable may be connected to the earphone and the plurality of signal lines transmitted from the radio device to the earphone include at least a voice signal, and the connection cable may act as an earphone cable.

In the antenna device with the above-described configuration, an open end of either the second antenna element or the third antenna element may be disposed at a predetermined distance from the sound production element.

In the antenna device with the above-described configuration, both or one of the first antenna element and the second antenna element may be substantially horizontal when the connection cable is connected to the portable radio device.

According to still another aspect of the invention, there is provided a radio device capable of receiving signals of a plurality of frequency bands and configured to be connectable to the connection cable.

With such a configuration, it is possible to acquire not only high antenna performance in multiple broad frequency bands, but also high broadcast receiving performance. Moreover, it is possible to satisfactorily receive three bands, that is, a third frequency band in the range of 90 MHz to about 110 MHz (which is a low channel in a VHF band), a second frequency band in the range of 170 MHz to about 220 MHz (which is a high channel in the VHF band), and a first frequency band in the range of 470 MHz to about 770 MHz (which is a UHF band).

### Advantage of the Invention

According to the invention, a first antenna element acts as an antenna operable in a first frequency band, all of the first antenna element and a second antenna element act as an antenna operable in a second frequency band, and a connection cable acts as an external antenna operable in both of the first frequency band and the second frequency band. As a result, in terms of the antenna disposed in the connection cable that is connected to the portable device and used as the external antenna, the antenna element is allowed to resonate in multiple broad frequency bands so as to be operable in a broadband. Therefore, it is possible to provide the connection cable having high broadcast receiving performance.

### Brief Description of the Drawings

[Fig. 1] Fig. 1 is a view showing a basic configuration of a portable device and a connection cable according to a first embodiment.
[Fig. 2] Fig. 2 is a view showing a configuration of an equivalent antenna of the portable device and the connection cable according to the first embodiment.
[Fig. 3] Fig. 3 is a view showing a state where the portable device and the connection cable according to the first embodiment are used (in the state of watching a television).
[Fig. 4] Fig. 4 is a sectional view showing the connection cable which is a constituent of the portable device and the connection cable according to the first embodiment, where the connection cable is cut in a round shape.
[Fig.5] Fig. 5 is a view showing a basic configuration of a portable device and a connection cable according to a second embodiment.
[Fig. 6] Fig. 6 is a view showing a basic configuration of a portable device and a connection cable according to a third embodiment.
[Fig. 7] Fig. 7 is a view showing an internal configuration of an earphone 25 which is a constituent of the portable device and the connection cable according to the first embodiment.
[Fig. 8] Fig. 8 is a view showing a configuration of the equivalent antenna of the portable device and the connection cable according to the first embodiment.
[Fig. 9] Fig. 9 is a view showing a specific structure of a circuit board 16 which is a main part according to a fourth embodiment.
[Fig. 10] Fig. 10 is a view showing a basic configuration of a portable device and a connection cable according to a fifth embodiment.
[Fig. 11] Fig. 11 is a view showing the basic configuration of the portable device and the connection cable according to the fifth embodiment.
[Fig. 12] Fig. 12 is a view showing a specific structure of a second relay unit 20, which is a main part, of the portable device and the connection cable according to the fifth embodiment.
[Fig. 13] Fig. 13 is a view showing a state where a known portable and a known connection cable are used (in a state of watching a television).

### Description of Reference Numerals and Signs

- 1:: RADIO DEVICE
- 2:: CONNECTION CABLE
- 3:: COAXIAL CABLE
- 3a:: COAXIAL LINE
- 4:: FIRST ANTENNA ELEMENT
- 5:: SECOND ANTENNA ELEMENT
- 6:: THIRD ANTENNA ELEMENT
- 7:: SIGNAL LINE
- 8:: CONNECTOR
- 10:: CONNECTION PIN
- 12:: TERMINAL SPRING
- 13:: RADIO CIRCUIT SECTION
- 14:: CONTROLLER
- 15:: CIRCUIT BOARD
- 16:: FIRST RELAY UNIT
- 17:: MATCHING CIRCUIT
- 18:: FIRST HIGH FREQUENCY CUT-OFF UNIT
- 19:: SECOND HIGH FREQUENCY CUT-OFF UNIT
- 20:: SECOND RELAY UNIT
- 22:: THIRD HIGH FREQUENCY CUT-OFF UNIT
- 23:: PUSH BUTTON
- 24:: CONTROL UNIT
- 25,26:: EARPHONE
- 27:: FILM
- D1:: PREDETERMINED INTERVAL

### Best Mode for Carrying Out the Invention

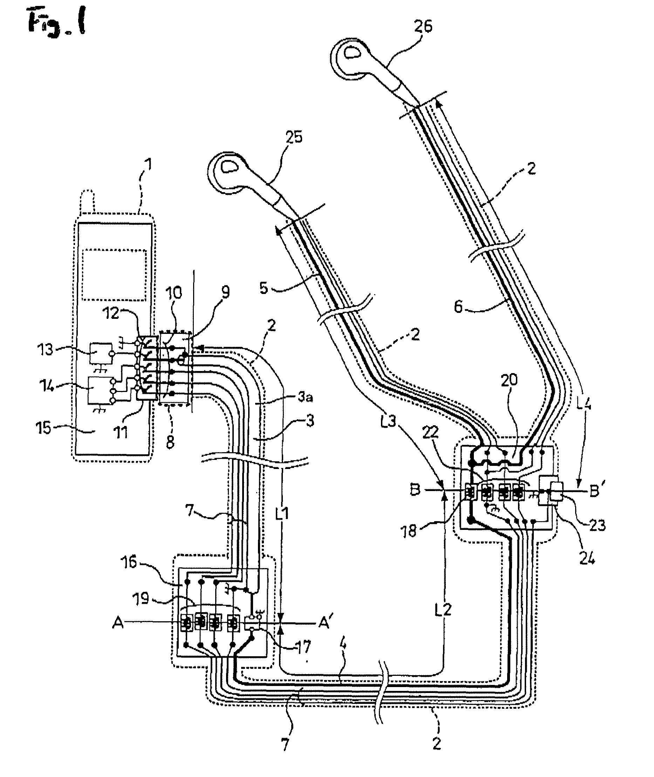

Hereinafter, an antenna device and a radio device according to embodiments of the invention will be described with reference to the drawings.
A portable device and a connection cable for the portable device according to a first embodiment are shown in Fig. 1.
At this time, an antenna of the portable device is an example in which a principal polarized wave is used to receive a horizontal terrestrial analog television broadcast. As frequencies that are used, there are three bands, that is, a third frequency band in the range of 90 MHz to about 110 MHz (which is a low channel in a VHF band), a second frequency band in the range of 170 MHz to about 220 MHz (which is a high channel in the VHF band), and a first frequency band in the range of 470 MHz to about 770 MHz (which is a UHF band). In addition, those three bands are used to receive a terrestrial digital television broadcast. A frequency of the terrestrial digital television broadcast is included in the first frequency band.

In embodiments that are described below, a coaxial line is exemplified. However, the invention may employ a wire harness in which a plurality of wires are wound, a flat harness in which a plurality of wires are parallel disposed, and the like.
As a relay substrate, the invention may employ a circuit board in which a plurality of electronic components are mounted on a circuit pattern that is formed depending on a hard or soft base material, or a structure in which an electronic component, an element, and the like are provided on a predetermined position of a wire.

Even in applications using multiple frequency bands other than a television broadcast, the invention can be more effective by changing a length of an antenna element.

### (First Embodiment)

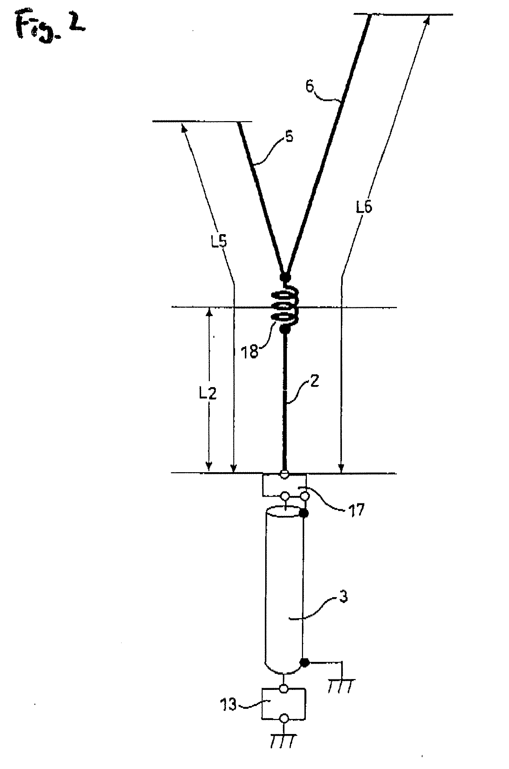

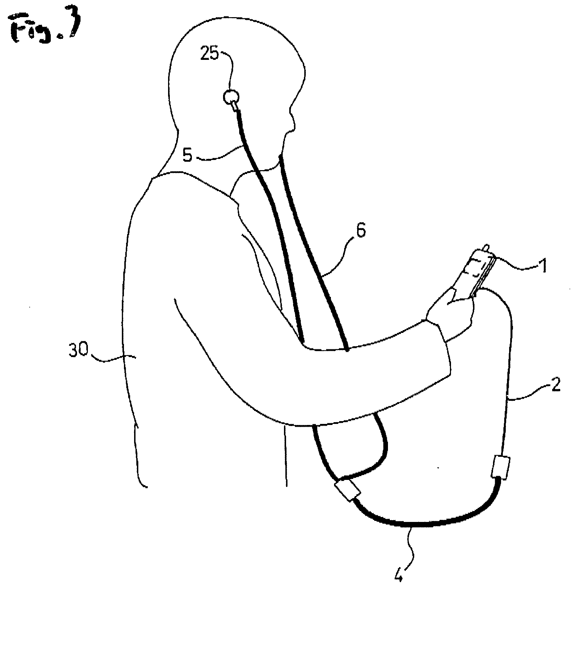

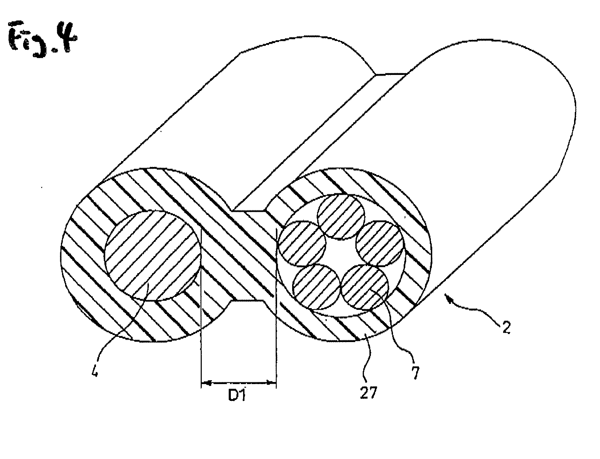

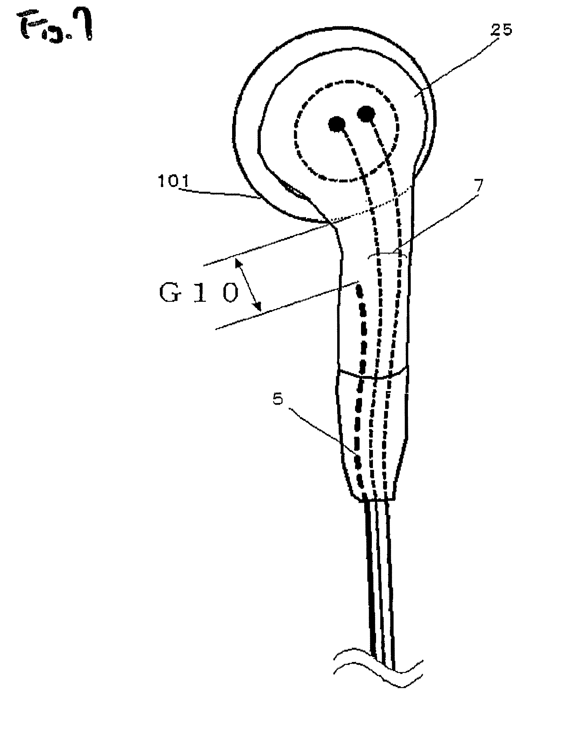

Fig. 1 is a view showing a basic configuration of a portable device and a connection cable according to a first embodiment of the invention. Fig. 2 is a view showing a configuration of an equivalent antenna of the portable device and the connection cable according to the first embodiment of the invention. Fig. 3 is a view showing a state where the portable device and the connection cable according to the first embodiment are used (in the state of watching a television). Fig. 4 is a sectional view showing the connection cable which is a constituent of the portable device and the connection cable according to the first embodiment of the invention. Fig. 7 is a view showing an internal configuration of an earphone 25 which is a constituent of the portable device and the connection cable according to the first embodiment of the invention. In Figs. 1 to 4 and Fig, 7, the same reference numerals are given to the same components.
Fig. 1 shows a state where a connector 8 provided on one end of a connection cable 2 is inserted in a connector 11, which is a connection unit, disposed in a housing 1 of the portable device according to the first embodiment. A circuit board 15 is disposed in the housing 1.

A radio circuit section 13 that has a television tuning function of at least one of a terrestrial analog television broadcast and a terrestrial digital television broadcast, a controller 14 that has a calculation function, a memory function, and the like, and the connector 11 are mounted on the circuit board 15 in the state of mechanically fixing thereto by the use of a soldering or the like.

A plurality of terminal springs 12 disposed in the connector 11 are connected to the radio circuit section 13, the controller 14, and a ground pattern which is a ground a potential of the circuit board 15 via a printed pattern formed on the circuit board 15.

A circuit board 9 is disposed in the connector 8 and a plurality of connection pins 10 are mechanically fixed to the circuit board 9 by the use of a soldering or the like. By inserting the plurality of connection pins 10 of the connector 8 in the connector 11, the plurality of connection pins 10 and the plurality of terminal springs 12 are mechanically and electrically connected to each other. An internal conductor and a conductive external conductor of the coaxial cable 3 and a plurality of signal lines 7 are fixed to the circuit board 9 by the use of a soldering or the like.

The coaxial cable 3 is, for example, 75 Ω of a high frequency transmission line and formed of a flexible material. Then, the internal conductor is electrically connected to the radio circuit 13 and the external conductor is electrically connected to the ground pattern of the circuit board 15 via the connection pins 10 and the terminal springs 12. In addition, the outside of the conductive external conductor is covered with a nonconductive material. At this time, a length of the coaxial cable L1 is 25 cm.

Each of the plurality of signal lines 7 is a flexible linear conductor, and the outside of the linear conductor is covered with a nonconductive material. The signal lines 7 are electrically connected to the controller 14 via the connection pins 10 and the terminal springs 12.

The coaxial cable 3 and the plurality of signal lines 7 are covered and tied with a nonconductive material forming the connection cable 2. At this time, since the outsides of the coaxial cable 3 and the plurality of signal lines 7 in the connection cable 2 are covered with a nonconductive material, they have a configuration such that metal portions of the coaxial cable 3 and the plurality of signal lines 7 do not come in contact with each other.

A first relay unit 16 is connected to the other end of the connector 8 of the coaxial cable 3. A matching circuit 17 and a plurality of inductance elements 19 which are second high frequency cut-off units are mechanically fixed to a surface of a circuit board constituting the first relay unit 16 by the use of a soldering or the like.

In the matching circuit 17, one end thereof is connected to the internal conductor of the coaxial cable 3, that is, a coaxial line and the other end thereof is connected to an antenna element 4 which is a first antenna element. The matching circuit 17 adjusts an impedance value of the antenna element 4 to be 75 Ω in the UHF band. The matching circuit 17 adjusts an impedance value of the antenna element constituted by the antenna element 4, the inductance elements 18 which is a first high frequency cut-off unit, and an antenna element 5 which is a second antenna element is to be 75 Ω at the high channel in the VHF band. The matching circuit 17 adjusts an impedance value of an antenna element constituted by the antenna element 4, the inductance elements 15, and an antenna element 6 which is a third antenna element to be 75 Ω at the low channel in the VHF band.

The plurality of inductance elements 19 are serially inserted in at least one of the plurality of signal lines 7. The inductance elements 19 control a high-frequency signal (antenna current) not to leak into the plurality of signal lines 7 parallel disposed with the coaxial cable 3 when the signal lines 7 that are parallel disposed with the antenna element 4 and the antenna element 4 are high-frequency capacitively coupled with each other. Accordingly, the plurality of inductance elements 19 may have a high impedance value relative to signals of the low channel in the VHF band, the high channel in the VHF band, and the UHF band, which are receive frequency bands of the system, and may have a low impedance value to current below 10 MHz. As described above, since the high-frequency signals are cut off in multiple broad frequency bands, one inductance element of which a self resonant frequency corresponds to the low channel in the VHF band and the high channel in the VHF band may be serially connected to one inductance of which a self resonant frequency corresponds to the UHF band. In addition, three or more of plural inductance elements may be serially disposed. Further, it may be a low pass filter, an LC parallel resonance circuit, or the like.

It is preferable for antenna performance that the plurality of inductance elements 19 are disposed along Line A-A'. This is because the signal lines 7 on the side of the coaxial cables 3 of the inductance elements 19 are directly high-frequency capacitively coupled with the signal lines 7 on the side of the antenna element 7 without passing by the inductance elements 19 and thus high-frequency current is leaked into the signal lines 7 on the side of the coaxial cable 3, thereby deteriorating the antenna performance when the inductance elements 19 are not disposed along Line A-A', Additionally, it is preferable for the antenna performance that the ground pattern which is a ground potential of the circuit board constituting the first relay unit 16 is not disposed more Line A-A' than the side of the antenna element 4.

The antenna element 4 is formed of a flexible linear conductor. One end of the antenna element 4 is connected to the first relay unit 16 and the other end thereof is connected to the second relay unit 20. As shown in Fig. 4, the antenna element 4 and the signal lines 7 are parallel disposed with each other at a predetermined interval D1 and covered with a film 27 which is a coating unit, thereby constituting the connection cable 2. According to an experiment of the present applicant, it is possible to ensure high antenna performance when the predetermined interval D1 is 1 mm or more. At this time, it is configured such that the plurality of signal lines 7 in the connection cable 2 are covered with a nonconductive material and metals thereof do not come in contact with each other.

One end of the antenna element 4, the inductance elements 18 which is a first high frequency cut-off unit, inductance elements 22 which is a third high frequency cut-off unit, a push switch 24 which is a portable device controlling unit, one end of the antenna element 5 which is the second antenna element, and one end of the antenna element 6 which is the third antenna element are mechanically fixed to the surface of the circuit board constituting the second relay unit 20 by a soldering or the like.

The antenna element 4 is electrically opened to the UHF band by the inductance elements 18 which are the first cut-off unit, thereby acting as an antenna operable in the UHF band so on the side connected to the second relay unit 20, A length L2 is in the range of 1/2 wavelength to about 3/2 wavelength in the UHF band and is 45 cm in the embodiment.

The inductance elements 18 may have a high impedance value relative to signals in the UHF band, a low impedance value relative to current of the high channel in the VHF band, and a self resonant frequency in the UHF band. In addition, the inductance elements 18 may be a low pass filter, an LC resonance circuit, or the like.

The push switch 24 is mounted with a push button 23. When a user pushes the push button 23, an electrical signal is transmitted to the controller 14 via the plurality of signal lines 7. For example, starting and ending a communication of the portable device can be carried out by pushing the push button close thereto, thereby improving convenience in use for the user. The push switch 24 may be such an external switch for changing a volume, a channel, and the like of the portable device. Alternatively, the number of the push switch 24 may be one or more.

The inductance elements 22 are serially connected to at least one or more of the plurality of signal lines 7 and is an element acting as the inductance elements 18. Then, the inductance elements 22 prevent a high-frequency signal in the UHF band from being leaked into the antenna element 5, the antenna element 6, and a portion that is parallel disposed with the antenna elements 5 and 6 among the plurality of signal lines via the signal lines 7 by capacitively coupling the antenna element 4 with the signal lines 7.

It is preferable for the antenna performance that the inductance elements 18 and the inductance elements 22 are disposed along Line B-B' on the second relay unit 20. The plurality of signal lines 7 are branched from the second relay unit 20 into two parts. In the two branched parts of the plurality of signal lines 7, the antenna element 5 is parallel disposed on one side thereof (where the antenna element and the earphone are not electrically connected to each other) and the front end (first front end) of the plurality of signal lines 7 are electrically connected to an earphone 25 which is a sound production element. On the other hand, the antenna element 6 is parallel disposed on the other side thereof and the front ends (second front end) of the signal lines 7 are electrically connected a earphone 26 which is the sound production element.

In the earphone 25, as shown in Fig. 7, a sound hole surface 101 inserted in the user's ear is disposed at a position away from the opening end of the antenna element 5 by an interval G10. According to an experiment of the present applicant, it is possible to reduce deterioration with age of the antenna performance caused by an action that the antenna element approaches an ear which is a part of a human body when the interval G10 is 1 mm or more, thereby ensuring high antenna performance. It is possible to acquire high antenna performance as the interval G10 becomes wider.

As shown in Fig. 4, the antenna element 4 and the plurality of signal lines 7 are disposed at a predetermined interval D1 and covered with the film 27, thereby constituting the connection cable 2. According to an experiment of the present applicant, it is possible to ensure high antenna performance when the predetermined interval D1 is 1 mm or more. It is possible to acquire high antenna performance as the predetermined interval D1 becomes wider. The antenna element 5 and the antenna element 6 are electrically connected to the antenna element 4 via the inductance elements 18, on the side connected to the second relay unit 20. The inductance elements 18 have a low impedance value in the VHF band, but have a high impedance value in the UHF band.

Accordingly, as an antenna operable in the high channel in the VHF band, the antenna element 4 and the antenna element 5 act as one antenna with a length (L2 + L3 = L5 = 95 cm) in the range of 1/4 wavelength to about 3/4 wavelength at the corresponding frequency band.

As an antenna operable in the low channel in the VHF band, the antenna element 4 and the antenna element 6 act as one antenna with a length (L2 + L4 = L6 = 140 cm) in the range of 1/4 wavelength to about 3/4 wavelength at the corresponding frequency band.

As an antenna operable in the UHF band, the antenna element 4 acts as one antenna with a length (L2 = 45 cm) in the range of 1/2 wavelength to about 3/2 wavelength at the corresponding frequency band.

When a user 30 watches a television as shown in Fig. 3, the antenna element 4 is horizontally disposed away from a body of the user 30. At this time, it is not necessary to dispose horizontally all the antenna element 4. According to an experiment of the present applicant, it is possible to acquire an effect that a principal polarized wave is horizontally inclined in the UHF band when 50% of a length of the antenna element 4 is horizontally disposed.

In the portable device and the connection cable with the above-described configuration, when the connector 8 of the connection cable 2 is fitted in the connector 8 of the portable device, as shown in Fig. 2, the antenna element 4 acts as an antenna with a length L2 = 45 cm or so operable in the UHF band, the antenna element 4 and the antenna element 5 act as an antenna with a length L5 = 95 cm or so operable in the high channel in the VHF band, and the antenna element 4 and the antenna element 6 act as an antenna with a length L6 = 140 cm or so operable in the low channel in the VHF band. The matching circuit 17 has a function of matching impedance values of the antenna elements with an input impedance value (generally, 75 Ω) of the radio circuit section 13.

In addition, the controller 14 transmits an electrical signal to the push switch 24, the earphone 25, and the earphone 26 via the plurality of signal lines 7.

In the portable device and the connection cable with the above-mentioned configuration, three antennas in which electrical lengths are different from one another are disposed in the earphone cable, compared with a known earphone cable which acts as a monopole antenna configured to resonate with only one frequency band. Thus, the three antennas are stable in three broad frequency bands of the terrestrial analog television. As a result, it is possible to acquire high antenna performance. When the three antennas are used in both of an analog television broadcast and a digital television broadcast in the UHF frequency band, a principal polarized wave can be horizontally inclined. As a result, it is possible to acquire high broadcast receiving performance.

In the portable device and the connection cable according to the first embodiment, while it is described about the antenna configurations corresponding to three frequency bands, that is, the low channel in the VHF band, the high channel in the VHF band, and the UHF band, the invention is not to be considered as limited by the foregoing description. When the antenna corresponds to two frequency bands that are away from each other, it is not necessary to branch the antenna element from the second relay unit 20 into two parts. For example, one earphone is enough. On the contrary, in the first embodiment, the antenna element is branched into two parts so as to correspond to three frequency bands that are away from one another, and an additional cable including the antenna element serves as a cable to which the two branched parts are connected.

In the portable device and the connection cable according to the first embodiment, in both of the first relay unit 16 and the second relay unit 20 that are disposed on both ends of the antenna element 4, the inductance elements 19 and 22 are serially disposed to the signal lines 7, but the invention is not to be considered as limited by the foregoing description. Even when at least one of the inductance elements 19 and 22 in the first relay unit 16 and the second relay unit 20 are serially disposed to the signal lines 7, even though the antenna performance is reduced more than when the inductance elements 19 and 22 are serially disposed to the signal lines 7 in both in the first relay unit 16 and the second relay unit 20, it is possible to acquire high antenna performance more than when the inductance elements 19 and 22 are not serially disposed to the signal lines 7 in both in the first relay unit 16 and the second relay unit 20.

In the portable device and the connection cable according to the first embodiment, the antenna element 4, the antenna element 5, and the antenna element 6 are parallel disposed with the plurality of signal lines 7 at a predetermined interval D1, and are covered with the film 27, but the invention is not to be considered as limited by the foregoing description, Even when the antenna element 4, the antenna element 5, and the antenna element 6 are parallel disposed with the plurality of signal lines 7 while being tied with one another without any interval therebetween, even though the antenna performance is reduced more than the configuration according to the first embodiment, it is possible to acquire high antenna performance in three frequency bands.

In the antenna device according to the invention, the first relay unit 16 is configured such that the plurality of inductance elements 19 are disposed on the circuit board, but the configuration is not limited to be formed on the circuit board. The first relay unit 16 may have a configuration provided with high frequency cut-off unit.

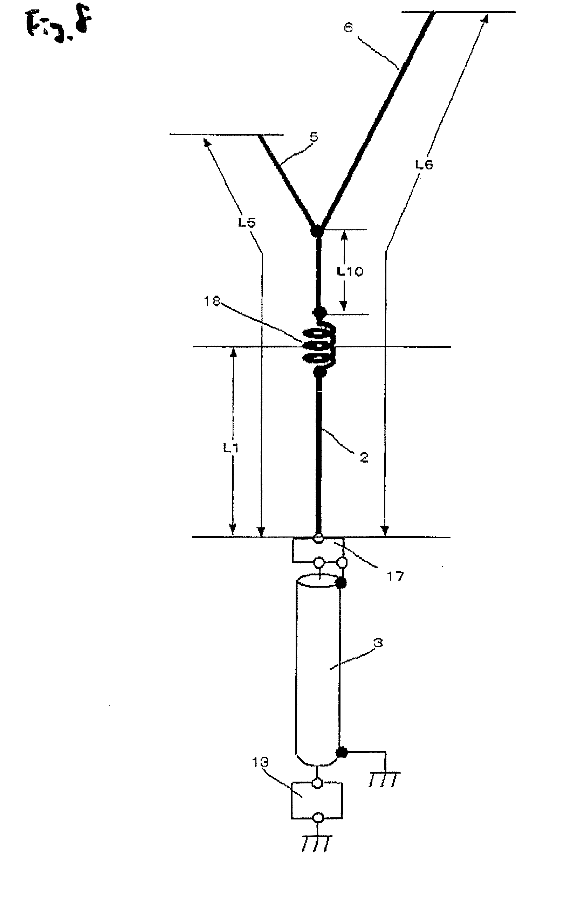

In the antenna device according to the invention, the antenna element 5 and the antenna element 6 are connected to the second relay unit 20 and branched from the second relay unit 20, but the invention is not to be considered as limited by the foregoing description. As shown in Fig. 8, the antenna element 5 and the antenna element 6 may be branched from the middle portion between the inductance elements 18 constituting the second relay unit 20 and the earphones 25 and 26. In this case, the antenna element 5 and the antenna element 6 use one antenna at the length L10.

### (Second Embodiment)

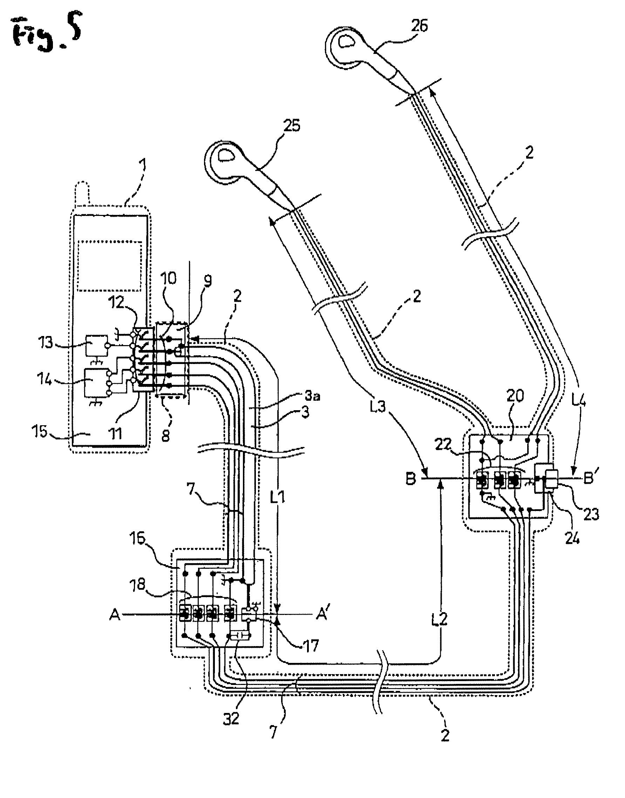

Fig. 5 is a view showing a basic configuration of the portable device and the connection cable according to a second embodiment of the invention. In the second embodiment, a different point from the first embodiment is that a capacitance element 32 is added on the first relay unit 16 and the first antenna 4, the second antenna 5, and the third antenna element 6 are removed. Other configurations are the same as those in the first embodiment.
In Fig. 5, the same reference numerals are given to the same components as Figs. 1 to 4, and repetitive explanations for those will be omitted.

The capacitance element 32 is mechanically fixed to the circuit board constituting the first relay unit 16 by the use of a soldering or the like and connected between the matching circuit 17 and at least one or more of the plurality of signal lines 7. At this time, the capacitance element 32 is connected to the signal lines 7 between the inductance elements 19 and the inductance elements 22. The capacitance element 32 has a low impedance value relative to signals of the low channel in the VHF band, the high channel in the VHF band, and the UHF band, which are receive frequencies of the system, and has a high impedance value relative to current below 10 MHz. According to an experiment of the present applicant, 820 pF or more of capacity is enough.

In the portable device and the connection cable with the above-described configuration, when the connector 8 of the connection cable 2 is fitted in the connector 11 of the portable device, the signal lines 7 between the inductance elements 19 and the inductance elements 22 act as an antenna operable in the UHF band, the signal lines 7 between the inductance elements 22 and the earphone 25 act as an antenna operable in the high channel in the VHF band, and the signal lines 7 between the inductance elements 22 and the earphone 26 act as an antenna operable in the low channel in the VHF band. The matching circuit 17 performs impedance matching between impedance values of the antenna elements and an input impedance value (generally, 75 Ω) with the radio circuit section 13. That is, unlike the first embodiment, the signal lines 7 can act as an antenna element without any additional antenna element by the configuration in which a high-frequency signal and a control signal are superimposed in the signal lines 7.
In the above-described configuration, according to an experiment, it was found that the antenna performance is deteriorated to a small extent in the range of 1 to 3 dB compared with the first embodiment in which the antenna elements 2, 5, and 6 are provided, but it is possible to acquire high antenna performance that sufficiently endures in practical use.

In the portable device and the connection cable with the above-described antenna configuration, the signal lines can act as an antenna element.
As a result, it is possible to acquire high antenna performance in multiple broad frequency bands with a simple configuration without any additional antenna element.

In the portable device and the connection cable according to the second embodiment, the capacitance element 32 is used, but the invention is not to be considered as limited by the foregoing description. It is possible to acquire the same effect when employing a component such as a high pass filter that decreases an impedance value in a specifically high frequency band and increases an impedance value in a specifically low frequency band.

### (Third Embodiment)

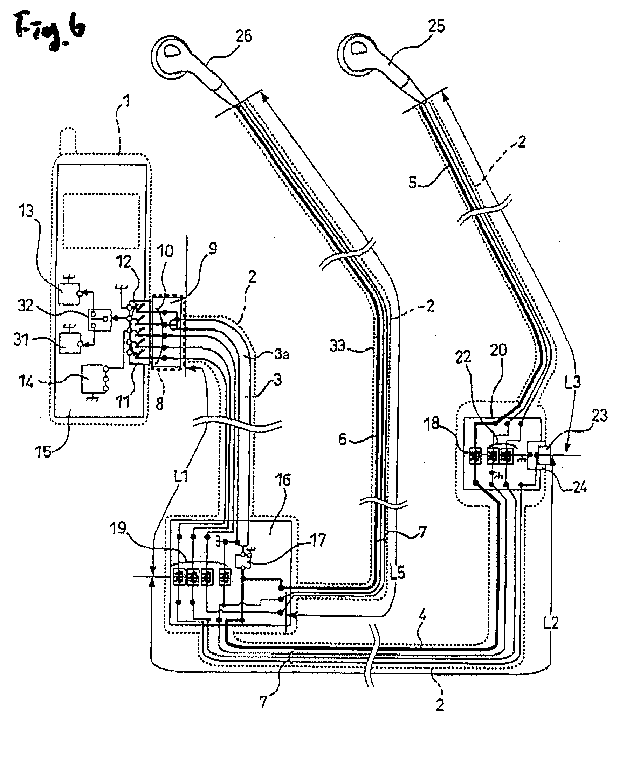

Fig. 6 is a view showing a basic configuration of the portable device and the connection cable according to a third embodiment of the invention.
In Fig. 6, the same reference numerals are given to the same components as Figs. 1 to 3 or Fig. 4, and repetitive explanations for those will be omitted,
A different point from the first embodiment is a position that the antenna element is branched into two parts. In the first embodiment, the antenna element 5 and the antenna element 6 are branched from the second relay unit 20. On the contrary, in the third embodiment, the antenna element 6 and the antenna element 4 are branched from the first relay unit 16. Accordingly, a length of the antenna element 6 is different from that of the first embodiment. Additionally, the branched connection cable corresponds to a cable 33 constituted by the antenna element 6 that is connected to the first relay unit 16 and a plurality of control lines 7 that are parallel disposed with the antenna element 6 are disposed.

The antenna element 6 is connected to the antenna element 4 on the circuit board constituting the first relay unit 16. The antenna element 6 acts as an antenna operable in the low channel in the VHF band. A length L6 of the antenna is in the range of 1/4 wavelength to about 3/4 wavelength of the low channel in the VHF band and is 140 cm. Both ends of the matching circuit 17 on the circuit board constituting the first relay unit 16 are connected to the antenna element 4 and the antenna element 6.

In the portable device and the connection cable with the above-described configuration, when the connector 8 of the connection cable 2 is fitted in the connector 11 of the portable device, the antenna element 4 acts as an antenna with a length L2 = 45 cm or so operable in the UHF band, the antenna element 4 and the antenna element 5 act as an antenna with a length L2 + L3 = 95 cm or so operable in the high channel in the VHF band, and the antenna element 6 acts as an antenna with a length L5 = 140 cm or so operable in the low channel in the VHF band. The matching circuit 17 performs impedance matching between impedance values of the antenna elements and an input impedance value (generally, 75 Ω) of the radio circuit section 13.

In the portable device and the connection cable with the above-described antenna configuration, since the antenna element for a low frequency band, which is difficult in acquiring high antenna performance, is configured to be away from the other antenna element, it is possible to improve the antenna performance operable in the low channel in the VHF band more than the first embodiment. Moreover, it is possible to ensure antenna performance in other frequency bands.

### (Fourth Embodiment)

Fig, 9 is a view showing a specific structure of the circuit board 16, which is a main part, according to a fourth embodiment of the invention.

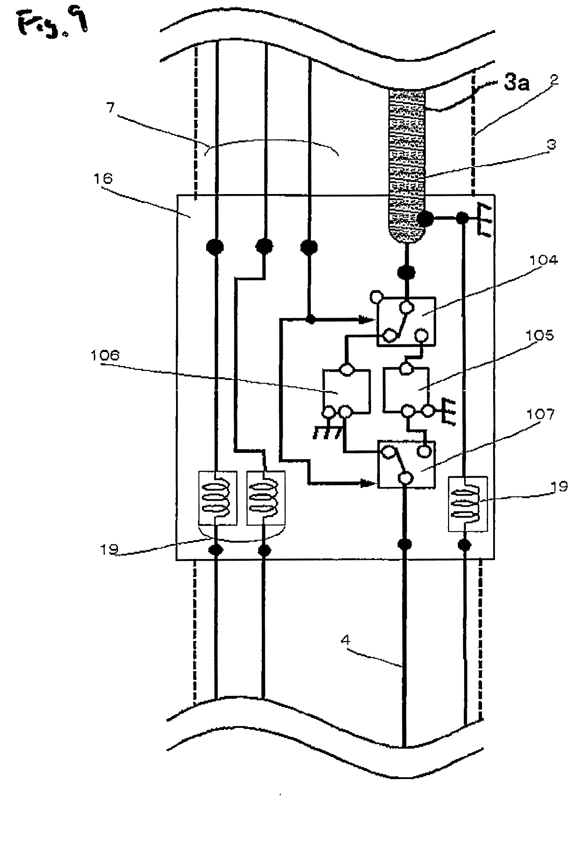

In Fig. 9, the same reference numerals are given to the same components as Figs. 1 to 4 or Fig. 7, and repetitive explanations for those will be omitted.

A different point from the first embodiment is that a matching circuit 105 and a matching circuit 106 which have different impedance values are provided on the circuit board 16 instead of the matching circuit 17, and the radio circuit section 13 and the antenna element 4 are connected to each other via either the matching circuit 105 or the matching circuit 106.

Selecting either the matching circuit 105 or the matching circuit 106 is carried out by transmitting an electrical signal to high frequency switches 104 and 107 via one of the signal lines 7.
In the portable device and the connection cable with the above-described configuration, since the matching circuit 105 and the matching circuit 106 which have different impedance values are switched, resonance frequencies of the antenna element 4, the antenna element 5, and the antenna element 6 when selecting the matching circuit 105 or when selecting the matching circuit 106 are different. As a result, a frequency band in which the impedance values of the antenna elements can match with the input impedance value (generally, 75 Ω) of the radio circuit section 13 broadens.

In the portable device and the connection cable with the above-described antenna configuration, it is possible to allow an operation frequency band of the antenna to be a broadband by simply switching a plurality of different matching circuits.
The antenna device according to the invention is not limited to the configuration in which the matching circuit 105 and the matching circuit 106 which have different impedance values are provided for a switching operation. It is possible to acquire the same effect when using a component capable of adjusting an impedance value of the matching circuit by the use of such devices as a pin diode and a varactor diode that can change electrical characteristics using an applied voltage.

### (Fifth Embodiment)

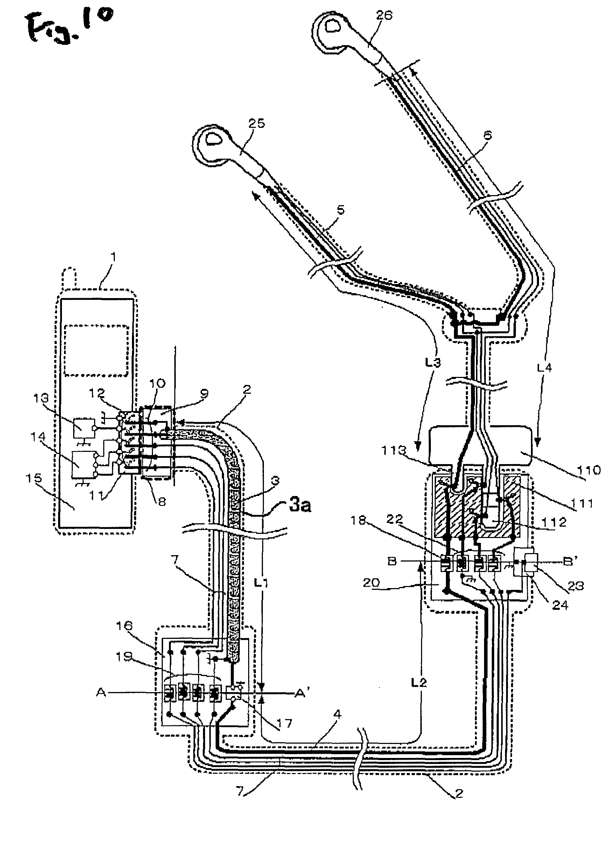

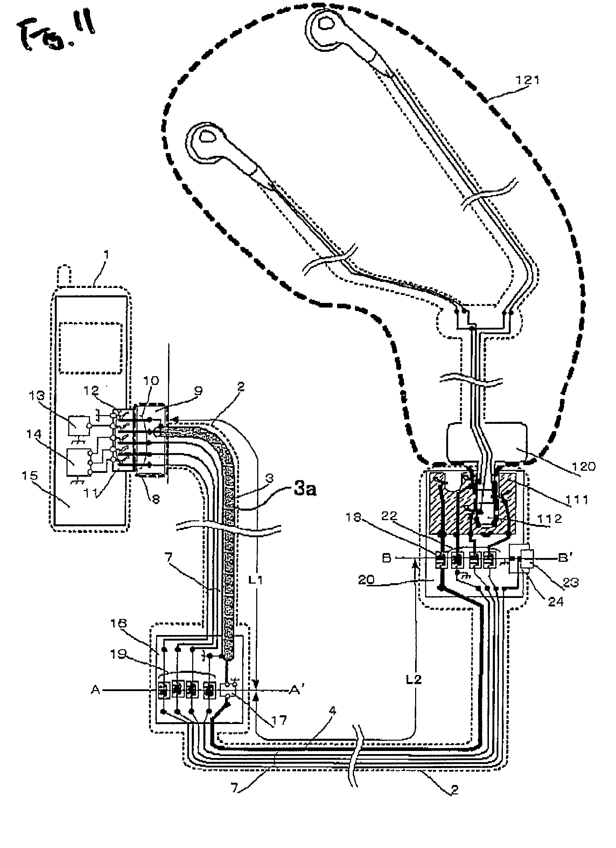

Figs. 10 and 11 are views showing a basic configuration of the portable device and the connection cable according to a fifth embodiment.
In Figs. 10 and 11, the same reference numerals are given to the same components as Figs. 1 to 4 or Fig. 7, and repetitive explanations for those will be omitted.

A different point from the first embodiment is to configure the connector 8 and the earphones 25 and 26 which are formed integrally with each other to be separable by the use of a jack 111 and a plug 110.
The plug 110 has four terminals. In the fifth embodiment, ϕ3.5 mm of a common three-pole terminal 112 and a one-pole terminal 113 are separately provided. The three pole terminal 112 is constituted by a left voice signal terminal, a right voice signal terminal, and an earth terminal which has the same potential as the earth of the circuit board 15 in a sequential order from the front end. The one pole terminal 113 is a terminal for only the antenna.

The jack 111 is disposed on the second relay unit 20 and can be fitted in the plug 110. Moreover, the jack 111 can be electrically connected to four terminals of the plug 110.
Accordingly, the antenna element 4 is electrically connected to the antenna elements 5 and 6 via the jack 111 and the plug 110, and the controller 14 is electrically connected to the earphones 25 and 26, which is the same electrical configuration as the first embodiment. Hereinafter, the range from the exclusive plug 110, where the antenna elements 5 and 6 are mounted and four terminals of the jack 111 are connected, to the earphones 25 and 26 are called an exclusive earphone.

As shown in Fig. 11, when a plug 120, of a general earphone 121, where the antenna elements 5 and 6 are not mounted is connected to the jack 111, the antenna element 4 can be operated in the UHF frequency and voice signals are transmitted to the earphones 25 and 26 via the jack 111 and the plug 120 as well,

In the portable device and the connection cable with the above-described configuration, the user can use the general earphone 121 that the user likes. As a result, it is possible to acquire high antenna performance in the frequency band corresponding to the length of the antenna element 4. In addition, when the exclusive earphone is mounted thereon, it is possible to acquire high antenna performance in multiple frequency bands corresponding to three lengths of the antenna element 4, the antenna elements 4 and 5, the antenna elements 4 and 6.

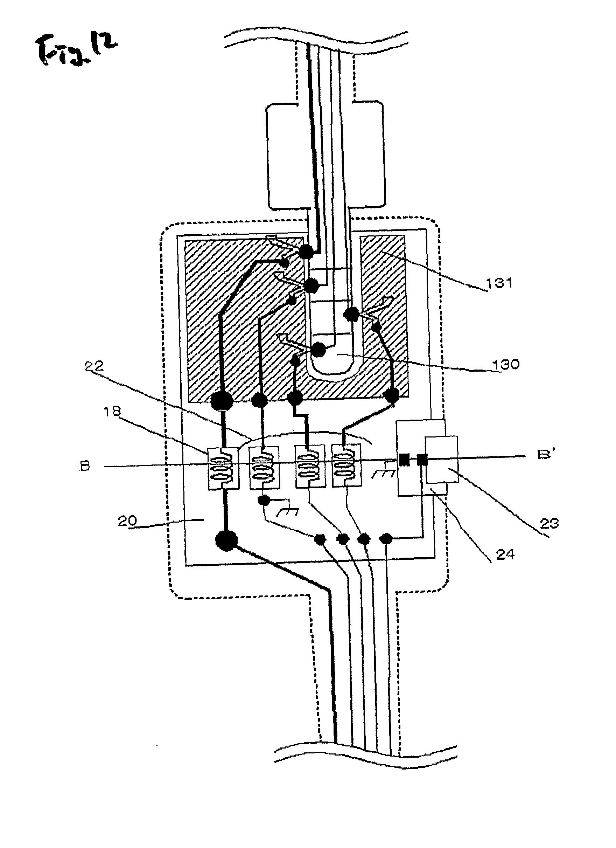

In the portable device and the connection cable with the above-described antenna configuration, it is possible for the user to improve a convenience in use. Moreover, it is possible to ensure high antenna performance.
In the portable device and the connection cable according to the fifth embodiment, a shape of the jack 111 is not limited to a configuration in which the three-pole terminal 112 and the one-pole terminal 113 are separately provided. For example, as shown in Fig. 12, even when ϕ3.5 mm of a common four-pole jack 131 and a four-pole plug 130 that is fitted in the jack 131 are provided, it is possible to acquire the same effect when the antenna element 4 is connectable to the antenna elements 5 and 6 via the jack 131 and the plug 130.

This application claims the benefit of priority to Japanese Patent Application No. 2005-56067, filed March 1, 2005 and Japanese Patent Application No. 2005-246450, filed August 26, 2005, and is hereby incorporated by reference in its entirety.

### Industrial Applicability

As described above, in an antenna device that is formed integrally with a connection cable according to the invention, an antenna element resonating with multiple frequency bands are disposed in a cable via a coaxial cable connected to a radio device and a relay unit, and a high frequency cut-off unit etc. are provided. As a result, since the antenna element and a signal line are electronically coupled with each other, it is possible to reduce deterioration in antenna performance. Additionally, since a principal polarized wave of the antenna element becomes horizontal, it is possible to acquire high communication performance in multiple broad frequency bands. Therefore, the antenna device results in high performance of a portable device having a communication function in multiple broad frequency bands for a television broadcast.

## Claims

1. An antenna device which is formed integrally with a first connection unit connected a radio device, a connection cable for transmitting a plurality of signals from the radio device to a peripheral device, and a plurality of antenna elements, the antenna device comprising:
a coaxial line that is connected to the first connection unit;
a first antenna element that is connected to the coaxial line and is disposed in the middle of the connection cable; and
a second antenna element that is connected to the first antenna element through a cut-off unit for cutting off a first frequency band,
wherein the first antenna element acts as an antenna operable in the first frequency band; and
wherein all of the first antenna element and the second antenna element act as an antenna operable, in a second frequency band, and signals received by the antenna elements are extracted from connection portions connected to the coaxial line and are transmitted to the radio device.

2. An antenna device which is formed integrally with a first connection unit connected a radio device, a connection cable for transmitting a plurality of signals from the radio device to a peripheral device, and a plurality of antenna elements, the antenna device comprising:
a first relay unit and a second relay unit that relay a plurality of signals and is disposed in the middle of the connection cable at a predetermined interval;
a first antenna element that is disposed between the first relay unit and the second relay unit; and
a second antenna element that is disposed between the first relay unit and the peripheral device,
wherein the first antenna element is connected to the second antenna element through a cut-off unit for cutting off a first frequency, and the cut-off unit being provided on the second relay unit;
wherein the first antenna element acts as an antenna operable in the first frequency band; and
wherein all of the first antenna element and the second antenna element act as an antenna in a second frequency band, and signals received by the antennas are extracted by the first relay unit and are transmitted to the radio device via the coaxial line disposed between the first connection unit and the relay unit.

3. The antenna device according to Claim 1 or 2, wherein a second connection portion and a third connection portion are branched from the second relay unit and are connected to the peripheral device, the second antenna element is disposed between the second relay unit and one of the second connection portion and the third connection portion, and a third antenna element is disposed between the second relay unit and the other of the second connection portion and the third connection portion; and
wherein all of the first antenna element and the third antenna element act as an antenna operable in a third frequency band.

4. The antenna device according to Claim 3, wherein an electrical length of the third antenna element is longer than that of the second antenna element.

5. The antenna device according to Claim 1 or 2, further comprising:
a third antenna element that is disposed between the first relay unit and a third connection portion branched from the connection cable connected to the first relay unit so as to be connected to the peripheral device;
wherein the third antenna element acts as an antenna operable in the third frequency band, and also acts as an external antenna of the radio device.

6. The antenna device according to Claim 5, wherein the third antenna element is longer than a combined electrical length of the first antenna element and the second antenna element.

7. The antenna device according to any one of Claims 3 to 6, wherein the first relay unit is provided with a second high frequency cut-off unit for cutting off the first and third frequency bands which is serially connected to a plurality of signal lines.

8. The antenna device according to any one of Claims 3 to 7, wherein the second relay unit is provided with a third high frequency cut-off unit for cutting off the first high frequency band which is serially connected to the plurality of signal lines.

9. The antenna device according to any one of Claims 1 to 8, wherein the first relay unit is provided with a matching circuit that is electrically connected to the coaxial line and the first antenna element so as to provide impedance matching therebetween.

10. The antenna device according to any one of Claims 2 to 9, wherein the first relay unit or the second relay unit is provided with a control unit for controlling the radio device which is disposed on the plurality of signal lines.

11. The antenna device according to any one of Claims 2 to 10, wherein the second relay unit is provided with a connection portion that enables detachable connection to the connection cable.

12. The antenna device according to any one of Claims 2 to 11, wherein the connection cable is provided with the plurality of signal lines and the antenna element, the signal lines and the antenna element are separately covered with a nonconductive film and are disposed at a predetermined distance from each other.

13. The antenna device according to Claim 12, wherein the peripheral device is an earphone having a sound production element, the connection cable is connected to the earphone, and the plurality of signal lines transmitted from the radio device to the earphone include at least a voice signal, and the connection cable acts as an earphone cable.

14. The antenna device according to Claim 13, wherein an open end of either the second antenna element or the third antenna element is disposed at a predetermined distance from the sound production element.

15. The antenna device according to any one of Claims 1 to 14, wherein both or one of the first antenna element and the second antenna element are substantially horizontal when the connection cable is connected to the portable radio device.

16. A radio device capable of receiving signals of a plurality of frequency bands and configured to be connectable to the connection cable according to any one of Claims 1 to 15.
